# EUROPEAN PATENT APPLICATION

(11) **EP 0 863 655 A2**
(43) Date of publication of application: **09.09.1998**
(21) Application number: 98103941.5
(22) Date of filing: 05.03.1998
(51) Int. Cl.: H04N 1/00

(54) **Facsimile machine**

(30) Priority: 07.03.1997 JP 53362/97
(71) Applicant: Murata Kikai Kabushiki Kaisha, Minami-ku, Kyoto-shi, Kyoto (JP)
(72) Inventor: Tanimoto, Yoshifumi, Koutari, Nagaokakyo-shi, Kyoto (JP)
(74) Representative: Liedl, Christine, Dipl.-Chem.

(57) **Abstract**

The facsimile machine (F) having its own printer is connected to a personal computer (PC) and a telephone line (La) respectively and has a plurality of mode selection keys on its control panel (4). A user of this FAX-PC system can determine an operating mode of the facsimile machine (F) by pressing a particular function key on the control panel even if the system has already been set by the software of the personal computer. One of the modes which the user can choose is a mode that causes the facsimile machine (F) to print data from its printer (10) whether it receives the data from the personal computer device or over the telephone line. In this mode, the data transmitted to the facsimile machine from the data terminal device is not sent to a remote facsimile machine via the telephone line and the data transmitted to the facsimile machine via the telephone line is not sent to the personal computer.

## Description

The present invention relates to a facsimile machine to which a data terminal device such as a personal computer is connected.

Since facsimile machines can send and receive image data, they have become prevalent in offices and homes. Data terminal devices such as personal computers capable of performing a variety of functions have also been developed and have also been utilized for many purposes. In recent years, such data terminal devices have been connected to facsimile machines enabling a user to operate the data terminal device and facsimile machine together.

When used together, the facsimile machine can scan image data and send it to the data terminal device (e.g., personal computer). In other words, the facsimile machine can serve as a scanner for the personal computer. The personal computer can then process or modify the image data. Further, the facsimile machine can receive the image data from the personal computer and print it on a recording sheet. In short, the facsimile machine is also able to serve as a printer for the personal computer. The facsimile machine can further perform data communication with a remote facsimile machine via a communication line or network (e.g., telephone line). This means that the personal computer connected to the facsimile machine can send and receive image data to and from a remote facsimile machine via the connected facsimile machine. In this case, the facsimile machine functions as a modem of the personal computer.

In the above described facsimile-personal computer system, however, the personal computer is operated as a leading machine and the facsimile machine is operated as a subordinate machine. Therefore, the operating mode of the combined system is determined by the personal computer, and the facsimile machine cannot set this operating mode. In other words, a user of this system cannot set or change the operating mode of the system by operating the facsimile machine. The user must operate the personal computer if the user wants to change the operating mode.

An object of the present invention is to propose a facsimile machine which can determine by itself its own operating mode in relation to the data terminal device to which it is connected.

In order to achieve this object, the present invention is a facsimile machine provided with its own printer, to which a data terminal device, and a telephone line or network are connected comprising setting means for setting the operating mode of the facsimile machine relative to the data terminal device such that the facsimile machine prints data from the printer whether the data is transmitted from the data terminal device or the telephone line, and control means for controlling an operation of the facsimile machine according to the operating mode set by the setting means. (This mode may be referred to as "local printing" mode.) In this mode, the data transmitted to the facsimile machine from the data terminal device is not sent to a remote facsimile machine via the telephone line. Likewise, the data transmitted to the facsimile machine from the telephone line is not sent to the data terminal device, and normal facsimile data reception is carried out by the facsimile machine.

The facsimile machine may include a memory for storing data sent from the telephone line or scanned by a scanner of the facsimile machine, and the operating mode may be a mode to cause the facsimile machine to transmit the data to the data terminal device from the memory. In this mode of operation, all data transmitted to the facsimile machine from the telephone line and stored in the memory is transferred to the data terminal device. The data sent from the telephone line and stored in the memory may be secure mail data (or confidential mail data) or data received prior to activation of the data terminal device.

The facsimile machine is able to receive data from both the data terminal device and telephone line, and the operating mode may give priority to data reception from the telephone line or data reception from the data terminal device. For example, if priority is given to data reception from the telephone line, the facsimile machine does not respond to a call from the data terminal device and does not receive data from the data terminal device. It should be noted that even if priority is given to the data reception from the telephone line, the facsimile machine receives data from the data terminal device as long as no data is transmitted from the telephone line. In this case, if there is a call from the telephone line while the facsimile machine is receiving data from the data terminal device, the data reception from the data terminal device is interrupted and the facsimile machine responds to a call from the telephone line and starts receiving data from the telephone line since priority has been given to the data reception from the telephone line.

Additional objects, aspects and advantages of the present invention will become apparent to those skilled in the art to which the invention relates from the subsequent detailed description of preferred embodiments and the appended claims as read in conjunction with the accompanying drawings.
- Figure 1: is a block diagram of the main elements of a facsimile machine of the present invention connected to a data terminal device;
- Figure 2: is a schematic diagram of an embodiment of a facsimile machine-data terminal device system according to the present invention;
- Figure 3: is a table showing the relationship between key numbers on a control panel of the facsimile machine shown in Figure 1, operating modes that are selected upon pressing associated keys, and operations to be executed upon mode selection;
- Figure 4: is a flowchart showing a series of operations executed by the facsimile machine shown in Figure 1 when local printing mode is selected;
- Figure 5: is a flowchart showing a series of operations executed when manual reception mode is selected;
- Figure 6: is a flowchart showing a series of operations executed when automatic reception mode is selected;
- Figure 7: illustrates a flowchart showing a series of operations executed when automatic transfer mode is selected; and
- Figure 8: illustrates a flowchart showing operations of the facsimile machine when priority selection mode is selected.

Now, a preferred embodiment of the present invention will be described with reference to the accompanying drawings,

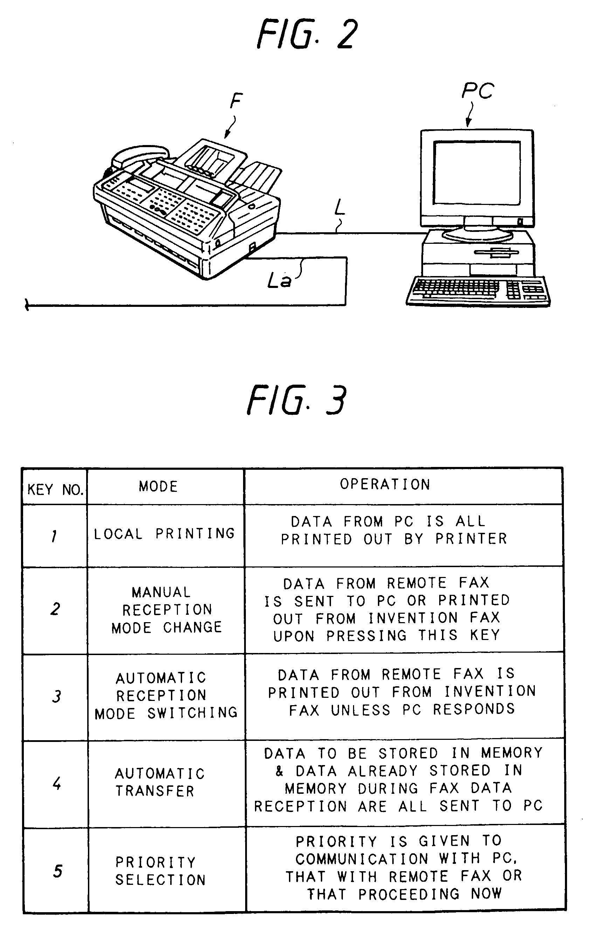

Referring first to Figure 2, a data terminal device (e.g., personal computer) PC is connected with a facsimile machine F via a communication line L according to RS-232C standards or the like, and the facsimile machine F is used to perform facsimile communication with a remote facsimile machine (not shown) via another communication line La such as a PSTN (Public Subscriber Telephone Network). The facsimile machine F can also function as a modem, printer and scanner for the connected personal computer PC.

It should be noted that the data terminal device is not limited to a personal computer. It may be any kind of device as long as it can communicate with the facsimile machine F. For example, a device which uses a standard protocol (EIA/TIA-578) such as Asynchronous Facsimile DCE Control Standard Service Class 1. In this "Service Class 1", the data terminal device defines a command to set and control the facsimile machine F and a response which the facsimile machine F outputs to the data terminal device in response to the command. The command and response are transmitted serially between the data terminal device and facsimile machine.

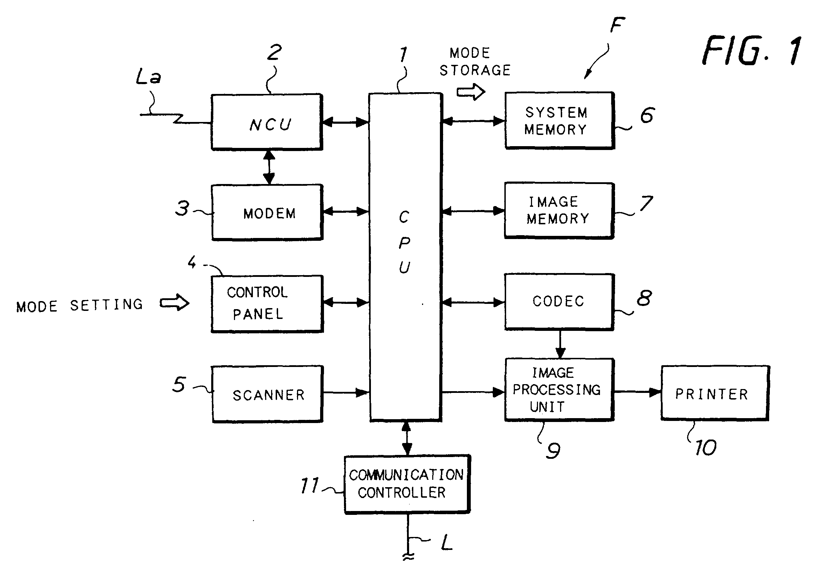

Figure 1 illustrates is an embodiment of a facsimile machine-data terminal device system according to the present invention. In this drawing, number 1 is a control means (i.e., CPU) for sending control signals, 2 designates NCU (Network Control Unit) for sending a dialing signal and the like to the communication line La, 3 designates a modem for modulating and demodulating signals in order to send and receive facsimile image data to and from a remote facsimile machine, 4 designates a control panel provided with numeric keys including operating mode selection keys and a display (e.g., LCD), 5 designates a scanner for scanning a document to be transmitted in the form of facsimile image data to the remote facsimile machine, 6 designates a system memory which includes ROM for storing programs needed for the processing executed by CPU and RAM for temporarily storing various data, 7 designates an image memory for storing image data transmitted from the personal computer PC via line L, data transmitted from a remote facsimile machine via the communication line La and data scanned by the scanner 5, 8 designates a codec for coding and decoding the image data according to MH or MR method, 9 designates an image processing unit for correcting the resolution of the image, re-sizing an image and smoothing the image data decoded by the codec 8, 10 designates a printer for printing the image data on a recording sheet, and 11 designates a communication controller for controlling communication between the personal computer PC and facsimile machine F via the line L.

In a default mode or PC-FAX mode (i.e,. when no particular mode selection key on the control panel 4 has been pressed), communication software installed in the personal computer PC is activated, and the initial mode setting is performed by signals sent from the personal computer PC via the communication controller 11. Thus, when facsimile data comes to the facsimile machine F from a remote facsimile machine via the communication line La, the data is transferred to the personal computer PC. Further, this mode causes the facsimile to dial a number of a designated remote facsimile machine and transmit data to the designated remote facsimile machine via the communication line La when the facsimile machine F receives data from the personal computer PC. The data scanned by the scanner 5 is sent to the personal computer PC from the facsimile machine F after coding by the codec 8. In this condition, therefore, the personal computer PC is a leading component of this system. If a user wants to perform general facsimile data reception or FAX mode (i.e., the facsimile machine F receives data and prints it from its printer 10 without sending the data to the personal computer) using the illustrated facsimile machine-personal computer system, the operating mode must be changed. While maintaining the normal PC-FAX mode, the switching of operating mode is only possible by operating the personal computer PC since the personal computer PC is a leading component of the system. For example, the software of the personal computer PC should be deactivated to switch the operating mode to FAX mode. This is the same as the conventional system.

In the present invention, on the other hand, the switching of the operating mode can be performed by operating the control panel 4 of the facsimile machine F. The user can then set the operating mode of the facsimile machine F of the facsimile-personal computer system by operating the control panel 4. The operating mode input by the user is stored in, for instance, RAM of the system memory 6, and CPU 1 then refers to this mode and controls operation such that the parts function according to the operating mode selected by the user. Thus, even if the operating mode is already set by the personal computer PC, it is possible to reset the operating mode through the facsimile machine.

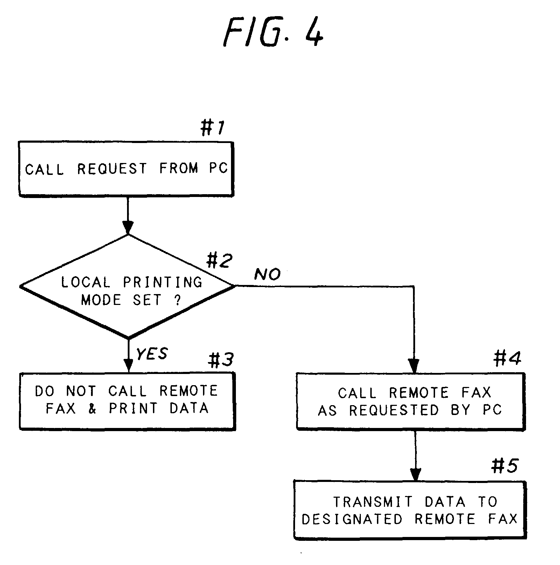

Figure 3 illustrates the relationship between function keys used to set the operating mode and the corresponding operations executed by the facsimile machine F. The illustrated functions will be described with reference to flowcharts shown in Figures 4 to 8.

The No.1 key is a "local print" key. If the user presses this key, the series of operations #1 to #5 shown in the flowchart of Figure 4 is executed. Referring to Figure 4, if local printing mode is set, the data transmitted to the facsimile machine F from the personal computer PC is printed out from the printer 10 even if a destination (remote facsimile machine) is designated by the personal computer PC. Specifically, the data from the personal computer PC is not transmitted via the communication line La to a remote facsimile device, and the facsimile machine F functions as a printer for the personal computer PC. All the data transmitted to the facsimile machine F via the communication controller 11 is first stored in the image memory 7 and then decoded by the codec 8. The decoded data is printed out from the printer 10.

Conventionally, if "local printing" should be performed by the facsimile machine F, a particular number or password must be sent to the personal computer PC. In the present invention, however, simply pressing the "local print" key on the control panel 4 of the facsimile machine F is sufficient. It is also unnecessary to enter a particular number.

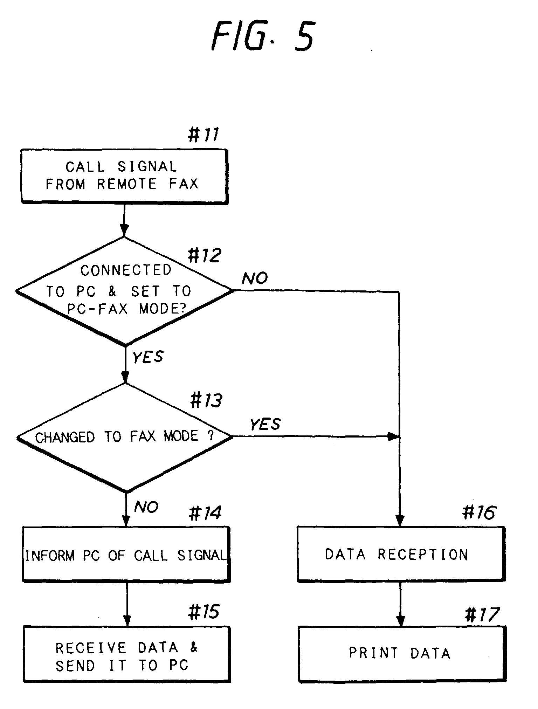

The No.2 key in the Figure 3 table is a reception switching key. Upon pressing this key, the facsimile machine F is operated according to the series of steps showing #11 to #17 of the flowchart of Figure 5. This key determines whether or not the data transmitted to the facsimile machine F from the remote facsimile machine via the communication line La should be transferred to the personal computer PC. If the data is not transmitted to the personal computer PC, it is printed out from the printer 10. This is simple facsimile communication (FAX mode). Conventionally, upon activation of communication software of the personal computer PC, the system is automatically set to PC-FAX mode as mentioned earlier. In this mode, all the data received from outside is transmitted to the personal computer PC. In the present invention, the user can change the PC-FAX mode to the simple FAX mode by pressing the No.2 key. It is unnecessary to deactivate the software of the personal computer PC to change the data reception mode from the PC-FAX mode to the FAX mode by operating the personal computer PC.

If the user presses the No.1 key to set the local printing mode and the No.2 key to set the FAX mode, the data transmitted to the facsimile machine F is always printed out from the printer 10 and not sent to the personal computer PC or remote facsimile machine. If the both No.1 and No.2 keys are pressed, the facsimile machine F is fixed to the FAX mode. In this case, the data transmitted to the facsimile machine F from the personal computer PC is not sent to a remote facsimile machine via the communication line La. It should be noted that the operation key unit 4 may include another key which allows the user to set the local printing mode and FAX mode simultaneously by pushing this single key.

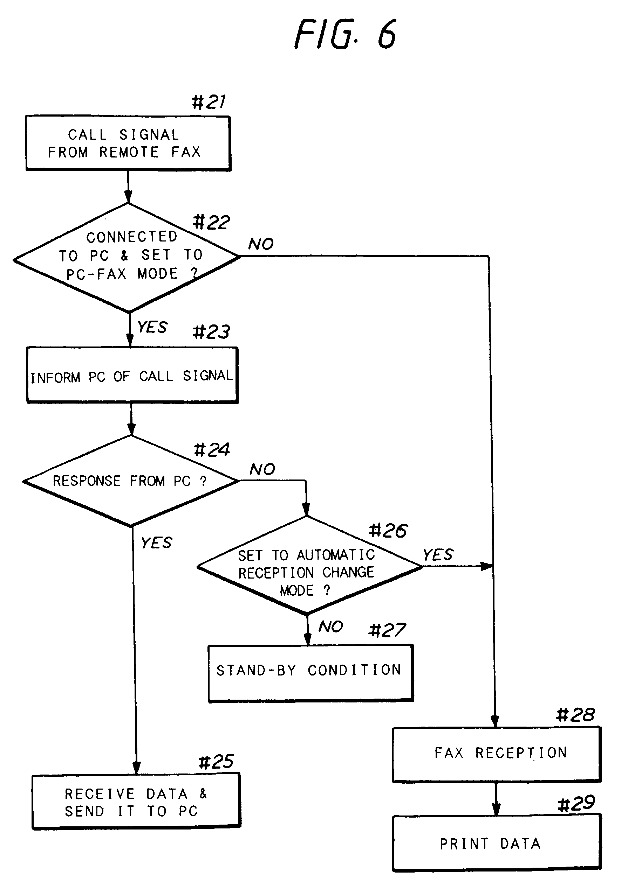

No.3 key in the table of Figure 3 is an automatic reception mode switching key. Upon pressing this key, the facsimile machine F is operated according to the series of steps shown in #21 to #29 of the flowchart of Figure 6. This key determines a manner of receiving data transmitted from the communication line La. Specifically, it automatically selects the PC-FAX mode or FAX mode depending upon given conditions. If there is a call on the communication line La, the personal computer PC is first informed of this fact. If the personal computer PC responds, then the data is transmitted to the personal computer PC (PC-FAX mode). Otherwise, the data is not transmitted to the personal computer PC and printed out from the facsimile machine F (FAX mode). Accordingly, switching to the FAX mode from the PC-FAX mode is carried out automatically. Consequently, either the personal computer PC or the facsimile machine F can receive the data reliably.

No.2 key is a key for manually selecting the PC-FAX mode or FAX mode. If the user selects the PC-FAX mode by the No.2 key, this mode is not automatically switched to the FAX mode.

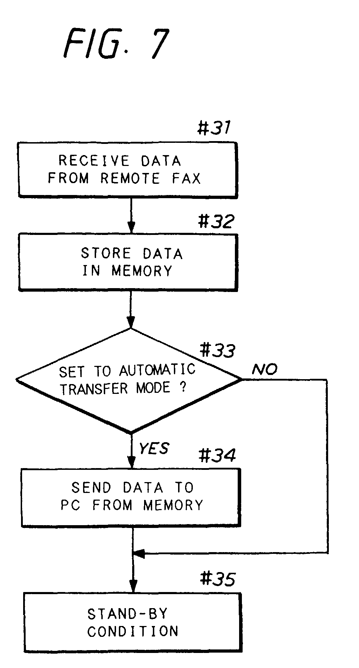

No.4 key of the operation unit 4 (Figure 3) is an automatic transfer key. Upon pressing this key, the facsimile machine F is operated according to a series of processing #31 to #35 as shown in the flowchart of Figure 7. Data sent to the facsimile machine F from a remote facsimile machine via the communication line La may be stored in the image memory 7 under certain circumstances. For example, secure mail data (confidential data) is stored in the memory, that part of data which cannot be printed out due to shortage of the recording sheet is stored in the memory, and journal data are stored in the memory. If No.4 key is pressed, all the data is automatically transmitted to the personal computer PC from the memory as long as there is data in the memory. Therefore, the user can retrieve the data from the personal computer PC and does not have to access the data from the facsimile machine F.

No. 4 key is particularly useful if some data is already stored in the facsimile machine F when the communication software of the personal computer PC is activated.

It should be noted that if the personal computer PC is already activated, No.4 key is also already pressed and the facsimile machine F is now receiving data which is normally stored in the memory such as confidential data, then the data may not be stored in the memory and immediately transmitted to the personal computer PC. In addition, the data transmission to the personal computer PC from the memory may not be carried out automatically based on selection of the No.4 key mode, but it may be carried out upon pressing another key in addition to selection of the No.4 key mode. Using such a key, the user can arbitrarily determine when the data stored in the memory should be sent to the personal computer PC.

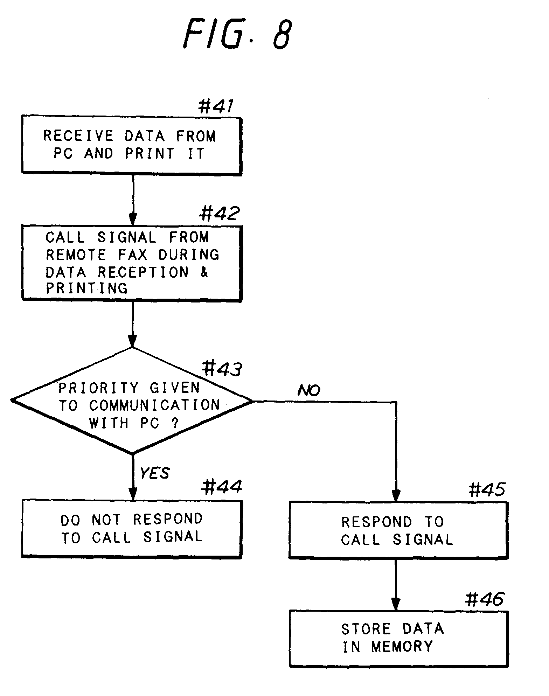

No.5 key of the operation unit 4 (Figure 3) is a priority selection key. The user presses No.5 key when the system in a stand-by condition. By pressing this key, the user can determine whether data communication for the personal computer PC or line La is given the priority. A series of processing steps #41 to #46 executed upon pressing this key is illustrated in the flowchart of Figure 8. If the priority has been given to communication with the personal computer PC and there is a call on the communication line La while the facsimile machine F is receiving data from the personal computer PC, the facsimile machine F does not respond the call on the line La. The facsimile machine F maintains communication with the personal computer PC. If priority has been given to the communication with a remote facsimile machine over the telephone line La and there is a call from the personal computer PC while the facsimile machine F is receiving data from the remote facsimile machine, the facsimile machine F does not respond to the call from the personal computer PC. The facsimile machine F maintains communication with the remote facsimile machine. In addition, if priority has been given to data communication with the remote facsimile machine and there is a call from the remote facsimile machine while the facsimile machine F is receiving data from the personal computer, then the data reception from the personal compute PC is interrupted and the facsimile machine F responds to the call (or facsimile data transmission) from the remote facsimile machine. If priority has been given to data communication with the personal computer PC and there is a call from the personal computer PC while the facsimile machine F is receiving data from a remote facsimile machine, then the data reception from the remote facsimile machine is interrupted and the facsimile machine F responds to the call from the personal computer PC.

When the data communication between the personal computer PC and facsimile machine F and that between the remote facsimile machine and facsimile machine F occur simultaneously, a considerable amount of data may be stored in the image memory 7. Not only data received from and transmitted to the personal computer PC but also data received from and transmitted to a remote facsimile machine is stored in the image memory 7. If the amount of these data exceeds memory 7's capacity, one or both of the communications is interrupted. By giving priority to one of these communications, such interruption can be prevented. In particular, if the user operates the personal computer PC to cause the facsimile machine F to print out a large amount of data, the user knows beforehand that the data may overflow the memory 7. In such a case, use of No.5 key is effective. The user gives priority to the data reception from the personal computer PC thereby refusing acceptance of data from the remote facsimile machine while the facsimile machine F is printing the data supplied from the personal computer PC.

## Claims

1. A facsimile machine (F) to which a data terminal device (PC) and a telephone line (La) are respectively connectable, the facsimile machine (F) having a printer (10), characterized in that the facsimile machine (F) comprises:
setting means (4) for setting an operating mode of the facsimile machine (F) relative to the data terminal device (PC), the operating mode being a mode to cause the facsimile machine to print data from the printer (10), which data is transmitted to the facsimile machine from the data terminal device or the telephone line (La); and
control means (1) for controlling an operation of the facsimile machine according to the operating mode set by the setting means.

2. A facsimile machine (F) to which a data terminal device (PC) and a telephone line (La) are respectively connectable, characterized in that the facsimile machine (F) comprises:
a memory (7) for storing data;
setting means (4) for setting an operating mode of the facsimile machine relative to the data terminal device, the operating mode being a mode to cause the facsimile machine to transmit the data to the data terminal device from the memory; and
control means (1) for controlling an operation of the facsimile machine according to the operating mode set by the setting means.

3. A facsimile machine (F) to which a data terminal device (PC) and a telephone line are respectively connectable such that the facsimile machine can receive data from the data terminal device and telephone line respectively, characterized in that the facsimile machine (F) comprises:
setting means (4) for setting an operating mode of the facsimile machine relative to the data terminal device, the operating mode being a mode to give priority to data reception from the telephone line or to data reception from the data terminal device; and
control means (1) for controlling an operation of the facsimile machine according to the operating mode set by the setting means.

4. The facsimile machine (F) of claim 1, characterized in that the data supplied from the data terminal device (PC) is not transmitted to the telephone line (La) even if the facsimile machine receives data transmission request from the data terminal device as long as the operating mode is set.

5. The facsimile machine (F) of claim 1, characterized in that the data supplied from the telephone line (La) is not transmitted to the data terminal device as long as the operating mode is set.

6. The facsimile machine (F) of claim 2, characterized in that the facsimile machine (F) has a scanner (5), and the data stored in the memory is data sent to the facsimile machine from the telephone line (La) before or after activation of the data terminal device (PC).

7. The facsimile machine (F) of claim 2, characterized in that the facsimile machine (F) has a scanner (5), and the data stored in the memory (7) is data scanned by the scanner of the facsimile machine.

8. The facsimile machine (F) of claim 3, characterized in that data reception from the data terminal device (PC) is interrupted if priority is given to the data reception from the telephone line (La) and the facsimile machine (F) receives data from the telephone line while the facsimile machine (F) is receiving data from the data terminal device.

9. The facsimile machine (F) of claim 3, characterized in that data reception from the telephone line (La) is interrupted if priority is given to the data reception from the data terminal device (PC) and the facsimile machine (F) receives data from the data terminal device while the facsimile machine is receiving data from the telephone line.

10. The facsimile machine (F) of claim 1, 2 or 3, characterized in that the data terminal device is a personal computer (PC).

11. A communication system comprising:
a facsimile machine (F) having a printer (10) and a memory (7), the facsimile machine (F) connected with a telephone line or network (La) to receive and send data from and to a remote communication device via the telephone line (La);
a personal computer (PC) having no printer and connected with the facsimile machine (F) such that the personal computer can send and receive data to and from the facsimile machine (F); and
mode selection means (4) for allowing a user to select one of a plurality of operating modes of the facsimile machine, the mode selection means being incorporated in the facsimile machine.

12. The communication system of claim 11, characterized in that the plurality of operating modes includes a first mode to print data from the printer (10) without transferring the data to the personal computer (PC) if the facsimile machine (F) receives data from the remote communication device.

13. The communication system of claim 11, characterized in that the plurality of operating modes includes a second mode to print data from the printer (10) without transferring data to the remote communication device when the facsimile machine (F) receives the data from the personal computer (PC).

14. The communication system of claim 11, characterized in that the plurality of operating modes includes a third mode to print data transmitted from the remote communication device from the printer if the personal computer (PC) does not respond to a signal indicating that the facsimile machine (F) has received the data from the remote communication device.

15. The communication system of claim 11, characterized in that the plurality of operating modes includes a fourth mode to transfer data to the personal computer (PC) from the facsimile machine (F), which data being supplied to the facsimile machine from the remote communication device, if the personal computer responds to a signal indicating that the facsimile machine has received the data from the remote communication device.

16. The communication system of claim 11, characterized in that the plurality of operating modes includes a fifth mode to transfer data to the personal computer when the facsimile machine (F) receives the data from the remote communication device.

17. The communication system of claim 11, characterized in that the plurality of operating modes includes a sixth mode to transmit the data to the personal computer from the memory if there is data in the memory.

18. The communication system of claim 11, characterized in that the plurality of operating modes includes a seventh mode to give priority to data reception from the remote communication device.

19. The communication system of claim 11, characterized in that the plurality of operating modes includes a eighth mode to give priority to data reception from the personal computer.

20. The communication system of claim 13, characterized in that the second mode is maintained even if the facsimile machine (F) receives data transmission request from the personal computer.

21. The communication system of claim 18, characterized in that data reception from the personal computer is interrupted if the seventh mode is selected and the facsimile machine (F) receives data from the remote communication device while the facsimile machine (F) is receiving data from the personal computer.

22. The communication system of claim 19, characterized in that data reception from the remote communication device is interrupted if the eighth mode is selected and the facsimile machine (F) receives data from the personal computer while the facsimile machine (F) is receiving data from the remote communication device.
